# EUROPÄISCHE PATENTANMELDUNG

(11) **EP 4 631 775 A1**
(43) Veröffentlichungstag der Anmeldung: **15.10.2025**
(21) Anmeldenummer: 25164693.1
(22) Anmeldetag: 19.03.2025
(51) Int. Cl.: B60L 53/62, H02J 1/00, B60L 53/67, B60L 53/10, B60L 53/30, B60L 53/63

(54) **LADEPUNKTE MIT ZENTRALEM GLEICHRICHTER UND SCHALTBAREN GLEICHSPANNUNGSSTELLERN**

(30) Priorität: 10.04.2024 DE 102024109907
(71) Anmelder: Amperfied GmbH, 69190 Baden-Württemberg Walldorf (DE)
(72) Erfinder: Weilmann, Sebastian, 74912 Kirchardt (DE); Kleibaumhüter, Klaus-Dieter, 76669 Bad Schönborn (DE); Twartz, Jennifer, 69207 Sandhausen (DE); Kahnwald, Sebastian, 68804 Altlußheim (DE); Wurster, Christoph, 69190 Walldorf (DE); Dölek, Ali, 68199 Mannheim (DE); Bechtler, Jochen, 69254 Malsch (DE)

(57) **Zusammenfassung**

Die Erfindung betrifft eine Vorrichtung zum Laden von Elektrofahrzeugen (8) umfassend wenigstens einen Netzanschluss (1), eine zentrale Leistungselektronik (2) und mehrere Ladestationen (5), welche jeweils über ein Kabel (10) mit der zentralen Leistungselektronik (2) verbunden sind, wobei die zentrale Leistungselektronik (2) ein oder mehrere Gleichrichter (3) aufweist. Die Erfindung zeichnet sich dadurch aus, dass den Gleichrichtern (3) in der zentralen Leistungselektronik (2) wenigstens ein galvanisch trennender Gleichstromsteller (4) nachgeschaltet ist und dass die Ladestationen (5) jeweils wenigstens einen nicht galvanisch trennenden Gleichstromsteller (6) aufweisen.

## Beschreibung

Die vorliegende Erfindung betrifft eine Vorrichtung zum Laden von Elektrofahrzeugen umfassend wenigstens einen Netzanschluss, eine zentrale Leistungselektronik und mehrere Ladestationen, welche jeweils über ein Kabel mit der zentralen Leistungselektronik verbunden sind, wobei die zentrale Leistungselektronik ein oder mehrere Gleichrichter aufweist.

Eine derartige Ladevorrichtung für Elektrofahrzeuge ist aus der Patentanmeldung US 2022/0363155 A1 bekannt, wobei die Ladevorrichtung so ausgelegt ist, dass sie mehrere Elektrofahrzeuge gleichzeitig laden kann, welche unterschiedliche Leistungsanforderungen haben. Um diese unterschiedlichen Leistungsanforderungen beim Laden von Elektrofahrzeugen zufrieden zu stellen, ist eine Schaltmatrix vorgesehen, welche Gleichstromleistungsteile entsprechend so verschaltet, dass an den einzelnen Ladestationen die vom jeweiligen Elektrofahrzeug benötigte höchstmögliche Ladeleistung zur Verfügung gestellt wird. Dies geschieht dadurch, dass ein Rechner die entsprechenden Gleichstromsteller so mit den Ladestationen über die Schaltmatrix vernetzt, dass die abgerufene Leistung an den Ladestationen möglichst der höchstzulässigen Ladeleistung des angeschlossenen Elektrofahrzeuges entspricht. Auf diese Art und Weise können Elektrofahrzeuge besonders schnell und effizient geladen werden.

Es ist Aufgabe der vorliegenden Erfindung, eine Vorrichtung zum Laden von mehreren Elektrofahrzeugen mit mehreren Ladestationen zu schaffen, welche mit möglichst wenigen und günstigen elektronischen Komponenten auskommt und zugleich eine hohe Flexibilität beim Laden von Elektrofahrzeugen mit höheren Ladeleistungen ermöglicht.

Diese Aufgabe wird erfindungsgemäß durch Patentanspruch 1 gelöst, vorteilhafte Ausgestaltungen der vorliegenden Erfindung sind den abhängigen Patentansprüchen, der Beschreibung und den Figuren zu entnehmen.

Die vorliegende Erfindung zeichnet sich dadurch aus, dass den Gleichrichtern in der zentralen Leistungselektronik wenigstens ein galvanisch trennender Gleichstromsteller nachgeschaltet ist und dass die Ladestation jeweils wenigstens einen nicht galvanisch trennenden Gleichstromsteller aufweist. Aus Normgründen und Sicherheitsgründen müssen die einzelnen Ladestationen gegenüber der Stromversorgung aus dem Netzanschluss galvanisch getrennt sein. Diese galvanische Trennung erfolgt üblicherweise auf der Gleichspannungsebene durch einen Gleichstromsteller, auch potentialtrennender DC/DC-Wandler genannt. Dieser Gleichstromsteller hat neben der galvanischen Trennung auch die Aufgabe, eine erste Gleichspannung in eine zweite meist deutlich höhere Gleichspannung umzusetzen. Erfindungsgemäß ist nun vorgesehen, dass die Gleichrichter, welche die für die Ladestationen erforderliche Gleichspannung zur Verfügung stellen, in der zentralen Leistungselektronik angeordnet sind und dahinter ein galvanisch trennender Gleichstromsteller nachgeschaltet ist, so dass die am Ausgang des galvanisch trennenden Gleichstromstellers über ein Kabel angeschlossenen Ladestationen alle zentral galvanisch vom Netz getrennt sind. Dies hat den großen Vorteil, dass die Ladestationen nicht selbst einen galvanisch trennenden Gleichstromsteller aufweisen müssen, sondern es kann ein viel günstigerer und kompakt bauender nicht galvanisch trennender Gleichstromsteller in der Ladesäule eingesetzt werden, welcher die für das jeweilige Elektrofahrzeug benötigte Ladespannung bereitstellt, aber eben keine galvanische Trennfunktion übernehmen muss. Mit der zentralen galvanischen Trennung ist somit ein besonders kostengünstiger und kompakter Aufbau von Ladesäulen möglich. Insbesondere bei einer höheren Anzahl von Ladesäulen, welche an eine zentrale Leistungselektronik angeschlossen sind, können somit enorme wirtschaftliche Vorteile erzielt werden.

In einer ersten Ausgestaltung der vorliegenden Erfindung ist vorgesehen, dass die zentrale Leistungselektronik mehrere Gleichrichter und/oder mehrere galvanisch trennende Gleichstromsteller aufweist. Bei einem hohen Leistungsbedarf der Ladestationen reicht ein Gleichrichter und ein galvanisch trennender Gleichstromsteller aufgrund der begrenzten Leistungsfähigkeit oft nicht aus, die angeschlossenen Ladestationen bei voller Belegung mit Elektrofahrzeugen mit ausreichend Ladeleistung zu versorgen. In diesem Fall ist es von Vorteil, wenn mehrere Gleichrichter und/oder galvanisch trennende Gleichstromsteller parallelgeschaltet werden, so dass die maximal vom Netzanschluss bereitgestellte elektrische Leistung genutzt werden kann. Es ist auch möglich, bei besonders hohem Leistungsbedarf die zentrale Leistungselektronik mit zwei oder mehr Netzanschlüssen zu speisen, um eine noch höhere Ladeleistung bereitzustellen.

Vorteilhafterweise ist außerdem vorgesehen, dass in einer oder mehreren Ladestationen neben dem nicht galvanisch trennenden Gleichstromsteller wenigstens ein galvanisch trennender Gleichstromsteller vorhanden ist. In diesem Fall kann eine Ladestation dazu genutzt werden, mehrere Elektrofahrzeuge zu laden, indem zwei oder mehrere Ladepunkte in der Ladestation vorgesehen sind. Da die zwei oder mehreren Elektrofahrzeuge beim Ladevorgang galvanisch voneinander getrennt sein müssen, müssen die zusätzlichen Gleichstromsteller galvanisch trennend sein, um den Sicherheitsanforderungen und der Norm zu genügen.

In einer weiteren Ausgestaltung der vorliegenden Erfindung ist vorgesehen, dass in wenigstens einer Ladestation die Ausgänge des nicht galvanisch trennenden Gleichstromstellers an die Ausgänge des wenigstens einen galvanisch trennenden Gleichstromstellers über einen Schalter verbindbar sind. Wenn an der Ladestation nur ein einziges Fahrzeug angeschlossen ist, kann über das Parallelschalten der Ausgänge des nicht galvanisch trennenden Gleichstromstellers und des wenigstens einen galvanisch trennenden Gleichstromstellers die Leistung der beiden Gleichstromsteller zusammengeschaltet werden und somit auch erhöhten Ladeleistungen von Elektrofahrzeugen Rechnung getragen werden. Da in diesem Fall nur ein Elektrofahrzeug geladen wird und in der zentralen Leistungselektronik bereits ein galvanisch trennender Gleichstromsteller vorhanden ist, können in der Ladesäule der nicht galvanisch trennende Gleichstromsteller und der galvanisch trennende Gleichstromsteller problemlos miteinander verschaltet werden, da in der zentralen Leistungselektronik auf jeden Fall die Potentialtrennung sichergestellt wird.

In einer weiteren Ausgestaltung der vorliegenden Erfindung ist vorgesehen, dass die zentrale Leistungselektronik eine Schaltmatrix aufweist, welche die Ausgänge der galvanisch trennenden Gleichstromsteller in der zentralen Leistungselektronik mit den Kabeln zu den Ladestationen verschaltet. Mit einer derartigen Schaltmatrix kann die Flexibilität in Bezug auf erhöhte Ladeleistungsanforderung der Ladestationen erhöht werden. Insbesondere können auf diese Art und Weise beliebig viele galvanisch trennende Gleichstromsteller und damit auch vorgeschaltete Gleichrichter parallelgeschaltet werden und somit erhöhte Ladeleistungen zu den jeweiligen Ladestationen geschickt werden.

Bei einer weiteren Ausgestaltung der Erfindung ist vorgesehen, dass die zentrale Leistungselektronik wenigstens einen Rechner aufweist, welcher die an den Ladestationen von den Elektrofahrzeugen abgerufene maximale Ladeleistung erfasst und mit der maximal zulässigen Leistung der Komponenten in der zentralen Leistungselektronik vergleicht. Mit diesem Rechner, welcher zentral oder dezentral aufgebaut sein kann, wird sichergestellt, dass keine der elektronischen Komponenten, welche am Ladevorgang beteiligt sind, überlastet wird. Dies gilt sowohl für die elektronischen Komponenten in der Ladesäule als auch für die elektronischen Komponenten der zentralen Leistungselektronik. Keine der beteiligten Komponenten darf überfordert sein. Deshalb sorgt der Rechner dafür, dass sowohl die Ladesäulen nicht überlastet werden als auch die zentrale Leistungselektronik und gegebenenfalls auch der Netzanschluss nicht überlastet werden kann. Dazu sind die maximalen Leistungen der beteiligten Komponenten im Rechner abgespeichert und werden bei der Steuerung der Ladevorgänge entsprechend berücksichtigt.

Vorteilhafterweise ist außerdem vorgesehen, dass der Rechner die Schaltmatrix derart steuert, dass an den Elektrofahrzeugen immer die für alle am Ladevorgang beteiligten Komponenten maximal zulässige Ladeleistung zur Verfügung steht. In diesem Fall kann der Rechner die Schaltmatrix im Rahmen der maximal zulässigen Belastung der elektronischen Komponenten so steuern, dass auch leistungshungrige Elektrofahrzeuge an den Ladestationen mit einer möglichst hohen Ladeleistung versorgt werden. Eine Überlastung der beteiligten Komponenten wird aber vermieden, da immer das am wenigsten belastbare Glied in der Kette zu dem Ladevorgang die maximal mögliche Ladeleistung vorgibt. Durch das flexible Verschalten über die Schaltmatrix von galvanisch trennenden Gleichstromstellern und Gleichrichtern ist aber eine flexible Bereitstellung von hoher Leistung für die Ladesäulen möglich.

Die vorliegende Erfindung wird nachfolgend anhand mehrerer Figuren beschrieben und erläutert. Es zeigen:
- Figur 1: eine erfindungsgemäße Ladevorrichtung zum Laden von Elektrofahrzeugen mit mehreren Ladesäulen und einer zentralen Leistungselektronik mit zentral angeordneten galvanisch trennenden Gleichstromstellern und nicht galvanisch trennenden Gleichstromstellern in den Ladesäulen,
- Figur 2: eine erfindungsgemäße Ladevorrichtung, wobei die Ladesäulen neben den nicht galvanisch trennenden Gleichstromstellern auch galvanisch trennende Gleichstromsteller aufweisen und
- Figur 3: eine erfindungsgemäße Ladevorrichtung, wobei die zentralen galvanisch trennenden Gleichstromsteller ausgangsseitig über eine Schaltmatrix für besonders hohe Ladeleistung an den Ladesäulen verschaltet werden können.

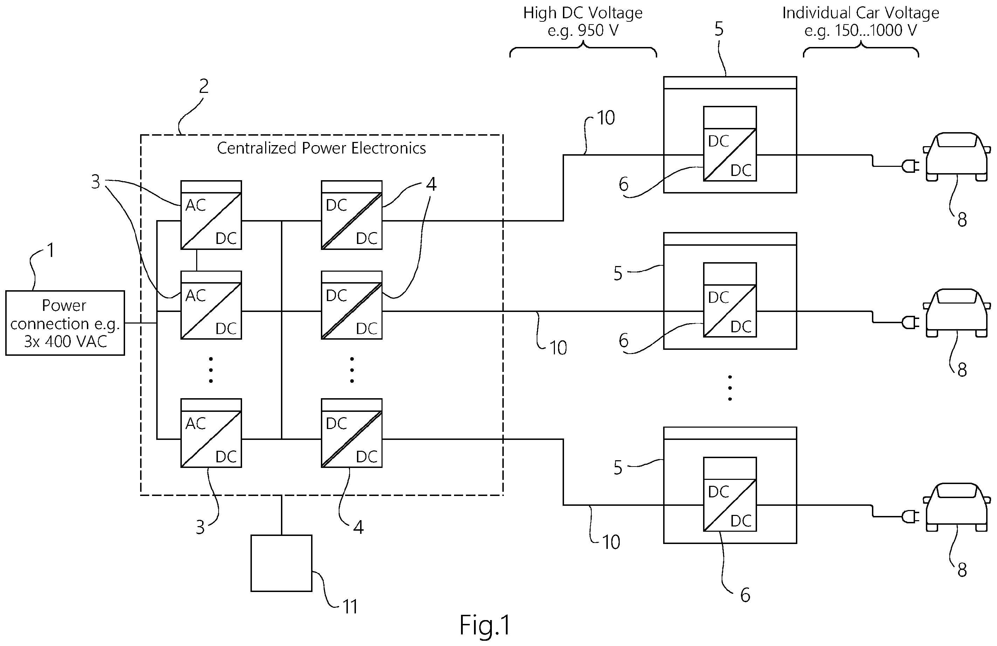

In Figur 1 ist eine erfindungsgemäße Ladevorrichtung abgebildet, welche über eine zentrale Leistungselektronik 2 verfügt, an die über Kabel 10 mehrere Ladestationen 5 angeschlossen sind. An jeder dieser Ladestationen 5 kann jeweils ein Elektrofahrzeug 8 geladen werden. Derartige Ladevorrichtungen sind typisch für Ladeparks für Elektrofahrzeuge, wie sie an größeren Parkplätzen installiert sind. Die zentrale Leistungselektronik 2 ist an das Drehstromnetz 1 angeschlossen und wird von diesem mit elektrischer Energie versorgt. Die zentrale Leistungselektronik 2 besteht zum einen aus mehreren parallel geschalteten Gleichrichtern 3 sowie daran angeschlossen mehreren galvanisch trennenden Gleichstromstellern 4. Die Gleichrichter 3 sind parallelgeschaltet, so dass jeder galvanisch trennende Gleichstromsteller 4 die maximal zur Verfügung stehende, in der Ladesäule 5 benötigte Leistung abrufen kann. Die galvanisch trennenden Gleichstromsteller 4 haben zwei Aufgaben, zum einen trennen sie die Ladestationen 5 galvanisch vom Netzanschluss 1 und den übrigen elektronischen Komponenten der zentralen Leistungselektronik 2 und zum anderen erhöhen sie die Gleichspannung der Gleichrichter 3 auf eine deutlich höhere Ausgangsspannung. Es gibt Elektrofahrzeuge 8, welche inzwischen über eine Ladespannung von 800 Volt verfügen, so dass die an den Ladestationen 5 zur Verfügung stehende Spannung mindestens 800 Volt betragen sollte. Bei der Anordnung in Figur 1 beträgt die Ausgangsspannung der galvanisch trennenden Gleichstromsteller 950 Volt, welche dann über die Kabel 10 an den Ladesäulen 5 anliegen. In jeder der Ladesäulen 5 ist wiederum ein nicht galvanisch trennender Gleichstromsteller 6 vorhanden, welcher die für das jeweilige angeschlossene Elektrofahrzeug 8 benötigte Ladespannung bereitstellt. Diese Ladespannung kann von den nicht galvanisch trennenden Gleichstromstellern 6 zum Beispiel im Bereich 150 bis 1.000 Volt geregelt werden.

Da sämtliche Ladesäulen 5 von der zentralen Leistungselektronik 2 durch einen galvanisch trennenden Gleichstromsteller 4 bereits galvanisch getrennt sind, reicht es für die Ladestationen 5 aus, dass in jeder Ladestation 5 jeweils ein nicht galvanisch trennender Gleichstromsteller 6 vorhanden ist, welcher wesentlich kompakter baut als galvanisch trennende Gleichstromsteller 4 und zudem kostengünstiger ist.

Des Weiteren ist ein Rechner 11 vorhanden, welcher die Leistungsflüsse zu den Ladesäulen 5 überwacht und dafür sorgt, dass keine der beteiligten elektronischen Komponenten wie Gleichrichter 3, galvanisch trennende Gleichstromsteller 4 und nicht galvanisch trennende Gleichstromsteller 6 überlastet werden. Im Rahmen der maximal zulässigen Belastungen sorgt der Rechner 11 aber dafür, dass in den Ladesäulen eine möglichst hohe Ladeleistung von den Elektrofahrzeugen 8 abgerufen werden kann, um so den Ladevorgang möglichst kurz zu halten.

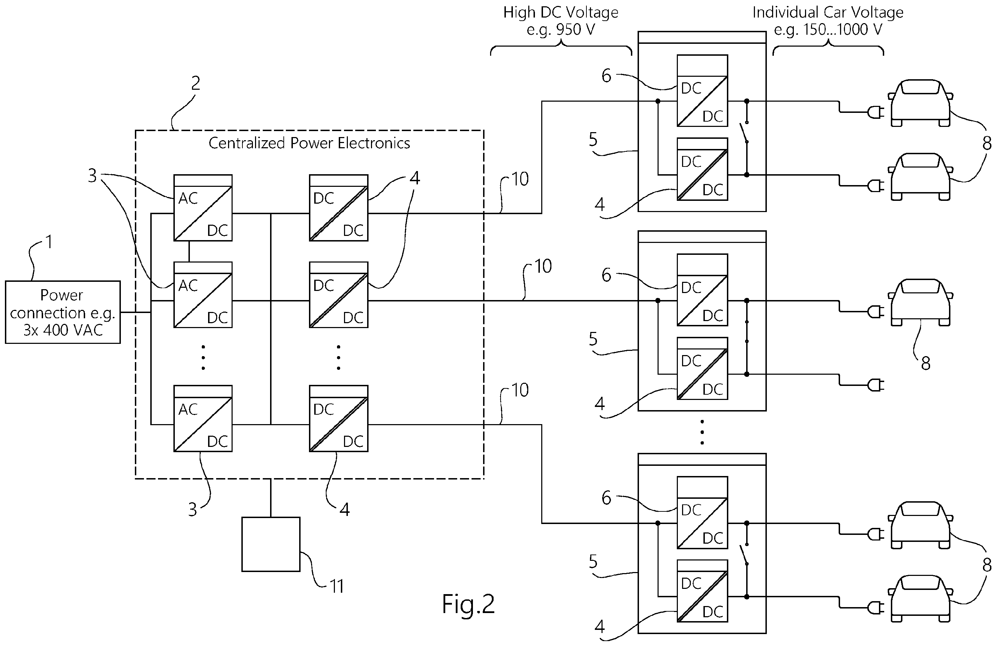

Die Ausführungsform in Figur 2 unterscheidet sich von der Ausführungsform in Figur 1 dadurch, dass nun in jeder der Ladesäulen 5 neben dem nicht galvanisch trennenden Gleichstromsteller 6 wenigstens ein weiterer galvanisch trennender Gleichstromsteller 4 vorhanden ist. Dieser kann zudem über einen Schalter 7 mit dem nicht galvanisch trennenden Gleichstromsteller 6 verbunden werden, wenn an der Ladestation 5 nur jeweils ein Elektrofahrzeug 8 angeschlossen ist. Wenn der Schalter 7 geöffnet ist, können an einer Ladestation 5 wenigstens zwei Elektrofahrzeuge 8 angeschlossen sein. Je mehr galvanisch trennende Gleichstromsteller 4 an einer Ladesäule vorhanden sind, desto mehr Elektrofahrzeuge 8 können angeschlossen werden. Allerdings ist die Anzahl der angeschlossenen Elektrofahrzeuge durch die maximale Leistung der zentralen Leistungselektronik 2 begrenzt. Die galvanisch trennenden Gleichstromsteller 4 und der nicht galvanisch trennende Gleichstromsteller 6 können selbst bei geschlossenem Schalter 7 nie mehr Ladeleistung für ein Elektroauto 8 zur Verfügung stellen, als von der zentralen Leistungselektronik 2 bereitgestellt werden kann. Dies ist bei der Dimensionierung der elektronischen Komponenten in den Ladesäulen 5 und in der zentralen Leistungselektronik 2 zu beachten, um eine optimal wirtschaftliche Betriebsweise der gesamten Ladevorrichtung zu ermöglichen.

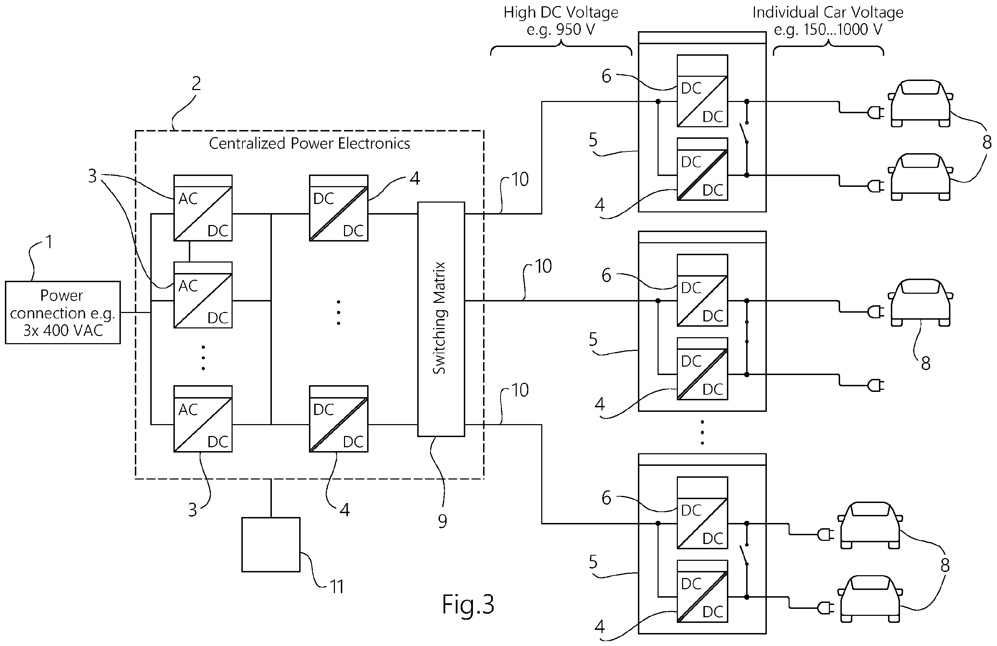

Figur 3 zeigt eine weitere Ausgestaltung der vorliegenden Erfindung, bei der die Ausführungsform in Figur 2 zusätzlich zur zentralen Leistungselektronik 2 eine Schaltmatrix 9 aufweist, welche von dem Rechner 11 gesteuert werden kann. In diesem Fall können die Ausgänge der galvanisch trennenden Gleichstromsteller 4 der zentralen Leistungselektronik 2 besonders flexibel verschaltet werden, so dass die einzelnen Ladesäulen 5 beim Abrufen der Ladeleistung nicht auf die maximale Leistung eines galvanisch trennenden Gleichstromstellers 4 in der zentralen Leistungselektronik 2 begrenzt sind, sondern sämtliche gerade nicht belasteten galvanisch trennenden Gleichstromsteller 4 in der zentralen Leistungselektronik 2 zur Verfügung stehen, um z. B. Elektrofahrzeuge 8 mit besonders hohem Leistungsbedarf an einer Ladesäule 5 laden zu können. Somit erlaubt die Ausgestaltung in Figur 3 ein besonders flexibles Laden von mehreren Elektrofahrzeugen 8 auch bei besonders hohem Leistungsbedarf eines oder mehrerer Elektrofahrzeuge 8, da die Ladeleistung einer Ladesäule 5, an die gerade kein Elektrofahrzeug 8 angeschlossen ist, dann über die Schaltmatrix 9 nicht an diese Ladesäule 5 geleitet werden muss, sondern anderen Ladesäulen 5 zur Verfügung gestellt werden kann. Selbstverständlich ist auch in diesem Fall die maximal mögliche Ladeleistung pro Ladesäule durch die elektronischen Komponenten der Gleichstromsteller 6, 4 in der jeweiligen Ladesäule 5 begrenzt.

### Bezugszeichenliste

- 1: Netzanschluss
- 2: zentrale Leistungselektronik
- 3: Gleichrichter
- 4: galvanisch trennender Gleichstromsteller
- 5: Ladestation
- 6: Gleichstromsteller
- 7: Schalter
- 8: Elektrofahrzeug
- 9: Schaltmatrix
- 10: Kabel
- 11: Rechner

## Patentansprüche

1. Vorrichtung zum Laden von Elektrofahrzeugen (8) umfassend wenigstens einen Netzanschluss (1), eine zentrale Leistungselektronik (2) und mehrere Ladestationen (5), welche jeweils über ein Kabel (10) mit der zentralen Leistungselektronik (2) verbunden sind, wobei die zentrale Leistungselektronik (2) ein oder mehrere Gleichrichter (3) aufweist,
**dadurch gekennzeichnet,**
**dass** den Gleichrichtern (3) in der zentralen Leistungselektronik (2) wenigstens ein galvanisch trennender Gleichstromsteller (4) nachgeschaltet ist und dass die Ladestationen (5) jeweils wenigstens einen nicht galvanisch trennenden Gleichstromsteller (6) aufweisen.

2. Vorrichtung zum Laden von Elektrofahrzeugen (8) nach Anspruch 1,
**dadurch gekennzeichnet,**
**dass** die zentrale Leistungselektronik (2) mehrere Gleichrichter (3) und/oder mehrere galvanisch trennende Gleichstromsteller (4) aufweist.

3. Vorrichtung zum Laden von Elektrofahrzeugen (8) nach Anspruch 1 oder Anspruch 2,
**dadurch gekennzeichnet,**
**dass** in einer oder mehreren Ladestationen (5) neben dem nicht galvanisch trennenden Gleichstromsteller (6) wenigstens ein galvanisch trennender Gleichstromsteller (4) vorhanden ist.

4. Vorrichtung zum Laden von Elektrofahrzeugen (8) nach einem der Ansprüche 1 bis 3,
**dadurch gekennzeichnet,**
**dass** in wenigstens einer Ladestation (5) die Ausgänge des nicht galvanisch trennenden Gleichstromstellers (6) und die Ausgänge des wenigstens einen galvanisch trennenden Gleichstromstellers (4) über einen Schalter (7) verbindbar sind.

5. Vorrichtung zum Laden von Elektrofahrzeugen (8) nach einem der vorhergehenden Patentansprüche,
**dadurch gekennzeichnet,**
**dass** die zentrale Leistungselektronik (2) eine Schaltmatrix (9) aufweist, welche die Ausgänge der galvanisch trennenden Gleichstromsteller (4) in der zentralen Leistungselektronik (2) mit den Kabeln (10) zu den Ladestationen (5) verschaltet.

6. Vorrichtung zum Laden von Elektrofahrzeugen (8) nach einem der vorhergehenden Patentansprüche,
**dadurch gekennzeichnet,**
**dass** die zentrale Leistungselektronik (2) wenigstens einen Rechner (5) aufweist, welcher die an den Ladestationen (5) von den Elektrofahrzeugen (8) abgerufene maximale Ladeleistung erfasst und mit der maximal zulässigen Leistung der Komponenten in der zentralen Leistungselektronik (2) vergleicht.

7. Vorrichtung zum Laden von Elektrofahrzeugen (8) nach Anspruch 5 und 6, **dadurch gekennzeichnet,**
**dass** der Rechner (5) die Schaltmatrix (9) derart steuert, dass an den Elektrofahrzeugen (8) immer die für alle am Ladevorgang beteiligten Komponenten maximal zulässige Ladeleistung zur Verfügung steht.
